# EUROPÄISCHE PATENTANMELDUNG

(11) **EP 3 461 553 A1**
(43) Veröffentlichungstag der Anmeldung: **03.04.2019**
(21) Anmeldenummer: 17193804.6
(22) Anmeldetag: 28.09.2017
(51) Int. Cl.: B01D 53/18, B01L 5/04, B01D 53/14

(54) **CO2-ABSORPTIONSFLASCHE**

(71) Anmelder: Dr.-Ing. Ritter Apparatebau GmbH & Co.KG, 44892 Bochum (DE)
(72) Erfinder: Ritter, Dr. Joachim, 44797 Bochum (DE)
(74) Vertreter: Köster, Hajo

(57) **Zusammenfassung**

Bereit gestellt wird ein Gefäß (1), insbesondere Flasche, zur Absorption eines Gases, insbesondere CO₂, aus einem Gasgemisch, wobei das Gefäß (1) mit einem Boden (3), mit einer Gaszuführungseinrichtung (20), mit einer Zuleitung (19), die geeignet ist, ein Gasgemisch in das Gefäß (1) zuzuführen, und mit einer Ableitung (30), die geeignet ist, ein im Gefäß (1) vorhandenes Gasgemisch aus dem Gefäß (1) abzuführen und oberhalb der Gaszuführungseinrichtung (20) in dem Gefäß (1) mündet, ausgestattet ist und im Betriebszustand bis auf die Zuleitung (19) und Ableitung (30) gasdicht geschlossenen ist, sowie ein Verfahren zur Absorption eines Gases, insbesondere CO₂. Erfindungsgemäß ist es möglich ein Gas, insbesondere CO₂ aus einem Gasgemisch wirksam und effektiv abzutrennen und das danach erhaltene Gas bzw. Gasgemisch aufzufangen.

## Beschreibung

Die Erfindung betrifft eine Gefäß, insbesondere eine Flasche, zur Absorption eines Gases, insbesondere CO₂, aus einem Gasgemisch, wobei das Gefäß mit einem Boden, mit einer Gaszuführungseinrichtung, mit einer Zuleitung, die geeignet ist, ein Gasgemisch in das Gefäß zuzuführen, und mit einer Ableitung, die geeignet ist, ein im Gefäß vorhandenes Gasgemisch aus dem Gefäß abzuführen und oberhalb der Gaszuführungseinrichtung in dem Gefäß mündet, ausgestattet ist und im Betriebszustand bis auf die Zuleitung und Ableitung gasdicht geschlossenen ist. Die Erfindung betrifft ferner ein Verfahren zur Absorption eines Gases, insbesondere CO₂, aus einem Gasgemisch, bei dem das zu behandelnde Gas durch eine vorgelegte Absorptionsflüssigkeit hindurchgeleitet und nach Austritt aus der Absorptionsflüssigkeit gesammelt wird.

Es ist schon seit langem bekannt, zur Absorption eines Gases dieses durch eine Flüssigkeit durchperlen zu lassen. Auch ist es seit langem bekannt, ein Gasgemisch zur Behandlung durch eine vorgelegte Flüssigkeit hindurchzuleiten, um eine oder mehrere Bestandteile dieses Gasgemisches zu behandeln, beispielsweise zu absorbieren und somit von den anderen Bestandteilen des Gasgemisches abzutrennen. Zu diesem Zweck werden Flaschen bzw. Gefäße eingesetzt, in die ein einfaches Tauchrohr eingesetzt ist, das in eine vorgelegte Flüssigkeit eintaucht und aus dem Gas in die Flüssigkeit geleitet wird und in Form von Perlen oder Blasen an die Oberfläche der Flüssigkeit aufsteigt.

Diese Vorgehensweise wird nicht nur eingesetzt, um ein Gas in eine Flüssigkeit, beispielsweise Wasser, einzuführen bzw. einzutragen, wie das beispielsweise bei Aquarien häufig geschieht, sondern auch um ein Gas aus einem Gasgemisch durch Absorption von den anderen Bestandteilen des Gasgemisches abzutrennen. In letzterem Fall ist es auch bekannt, das behandelte Gas nach seinem Austritt aus der vorgelegten Flüssigkeit zu sammeln bzw. aufzufangen

Im Falle von CO₂ enthält die vorgelegte Flüssigkeit eine Base. Bei dieser Flüssigkeit kann es sich beispielsweise um eine Natronlauge handeln, wobei zweckmäßigerweise eine dreimolare NaOH-Lösung eingesetzt wird.

Diese Technik kann man auch dazu einsetzen, um CO₂ aus Biogas durch Absorption abzutrennen. Das in dem ursprünglichen Gasgemisch enthaltene Methan wird nicht absorbiert, sondern tritt gasförmig aus der vorgelegten Flüssigkeit aus.

Der Ausdruck "Absorption" steht im Rahmen der vorliegenden Unterlagen nicht nur für eine klassische Absorption (Aufnahme eines Moleküls bzw. Gases in einer Phase), sondern für alle Arten der Abtrennung eines Gases aus einem Gasgemisch mit Hilfe einer vorgelegten Flüssigkeit.

Die oben beschriebenen Techniken zur Absorption von CO₂ aus einem Gasgemisch, beispielsweise Biogas, lassen zu wünschen übrig, wahrscheinlich auch, weil die Absorptionskapazität der Natronlauge nicht ausgeschöpft wird.

Um die Oberfläche der durch die vorgelegte Flüssigkeit durchgeperlten Gasblasen zu erhöhen, ist es auch schon bekannt, am unteren Ende des Tauchrohres einen sogenannten "Perlstein" einzusetzen. Derartige Perlsteine finden häufig in Aquarien Anwendung. Der Nachteil besteht jedoch darin, dass durch diese Perlsteine ein sehr hoher Druckverlust zu vergegenwärtigen ist.

Aus der DE 10 2004 036 596 A1 ist eine Gaseintragsvorrichtung zum Eintragen eines Gases in eine Flüssigkeit bekannt. Diese Gaseintragsvorrichtung ist mit einem Gasspeicherkörper ausgestattet, der einen Hohlraum und eine mit diesem Gasspeicherkörper verbundene Öffnung aufweist, wobei der Glasspeicherkörper mindestens im Bereich der Öffnung in die Vorlageflüssigkeit eintaucht. Bei dem Glasspeicherkörper kann es sich beispielsweise um einen glockenförmigen Behälter handeln.

Mit dieser bekannten Vorrichtung soll ein einfacher und verlustfreier Eintrag des Gases großflächig über Diffusion in die vorgelegte Flüssigkeit, beispielsweise in das Wasser eines Aquariums, erfolgen.

Es ist somit nicht vorgesehen, das zugeführte Gas durch die vorgelegte Flüssigkeit perlen zu lassen. Auch ist nicht vorgesehen, die aus der vorgelegten Flüssigkeit austretenden Gase aufzufangen.

Die WO 03/016 22 A1 (PCT/SE02/01424) beschreibt einen sektionsweise aufgebauten Belüfter für beispielsweise Reinwasser und Abwasser.

Dieser bekannte Belüfter ist mit mehreren trogartigen Elementen ausgestattet, die voneinander beabstandet übereinander angeordnet sind und über mehrere Rohrleitungen, die als Injektoren dienen, kommunizieren. Dieser bekannte Belüfter ist in die zu behandelnde Flüssigkeit eingetaucht. Druckluft wird in den unteren Trog eingeführt und steigt dann nach oben auf. Die Tröge sind dabei in umgestülpter Form angeordnet und besitzen einen zentralen Auslass, aus dem Gas noch oben entweichen kann.

Auch dieser bekannte Belüfter dient dazu, wie der Name sagt, ein Gas in eine vorgelegte Lösung einzutragen. Ein Auffangen des aus der behandelnden Flüssigkeit austretenden Gases ist nicht vorgesehen.

Aufgabe der vorliegenden Erfindung ist es, ein Gas, insbesondere CO₂, aus einem Gasgemisch wirksam und effektiv abzutrennen und das danach erhaltene Gas bzw. Gasgemisch aufzufangen.

Gelöst wird diese Aufgabe beispielsweise durch ein Gefäß gemäß dem Oberbegriff des Anspruchs 1.

Dieses Gefäß ist dadurch gekennzeichnet, dass die Gaszuführungseinrichtung einen haubenartigen Behälter darstellt, die Öffnung des haubenartigen Behälters zum Boden des Gefäßes zeigt und die Zuleitung in dem von der Seitenwand sowie von dem Bodenbereich des Behälters umgrenzenden Innenraum mündet.

Im Betriebszustand, wenn die vorgelegte Flüssigkeit in das erfindungsgemäße Gefäß eingefüllt ist, befindet sich der haubenartige Behälter unterhalb des Flüssigkeitsspiegels.

Das erfindungsgemäße Gefäß zeichnet sich ferner dadurch aus, dass die Querschnittsfläche der Zuleitung an ihrem im haubenartigen Behälter mündenden Ende kleiner ist als die vom freien Seitenrand der Seitenwand des Behälters umgrenzten Fläche. Als Querschnittsfläche der Zuleitung wird dabei diejenige Fläche bezeichnet, die von der Seitenwand der "hohlen" Zuleitung umgrenzt wird und die somit für den Gastransport zur Verfügung steht. Man kann diese Fläche auch als wirksame Querschnittsfläche bezeichnen.

Bei der genannten umgrenzten Fläche handelt es sich um diejenige Fläche, die vom freien Seitenrand und somit zum Boden des Gefäßes zeigenden Seitenrand des Behälters aufgespannt wird.

Bei Betrieb dieser erfindungsgemäßen Vorrichtung wird das zu behandelnde Gasgemisch, das zwei oder mehr gasförmige Komponenten enthalten kann, durch die Zuleitung in den haubenartigen Behälter zugeführt.

Die Gasblase im Inneren des Behälters wächst von innen nach außen, bis dieser Behälter gefüllt ist. Sobald der Innendruck der Gasblase einen gewissen Wert erreicht hat, entweicht fast der gesamte Behälterinhalt in einer großen Blase aus dem Behälter. Es wird angenommen, ohne an diese Erklärung gebunden zu sein, dass die Gasblase entweicht, sobald der Innendruck der Blase größer ist als die Oberflächenspannung. Durch die lange Verweilzeit der Gasblase im Behälter kann an der großen Oberfläche der Blase die Absorption stattfinden.

Der für die Zuleitung des Gases erforderliche Gasdruck ist nur geringfügig erhöht. Dieser Gasdruck muss höher sein als der Druck der statischen Flüssigkeitssäule oberhalb der Haube, und zwar derart, dass die Gasblase aus dem haubenartigen Behälter entweichen kann.

Der bei bisher bekannten Vorrichtungen auftretende Druckverlust kann somit vermieden werden. Mit der erfindungsgemäßen Vorrichtung können daher auch Gasgemische behandelt werden, die bei Umsetzungen, beispielsweise beim Betrieb oder beim Testen von Biogasanlagen anfallen. Druckerhöhungsvorrichtungen, um das entstehende Gasgemisch dem erfindungsgemäßen Gefäß zuzuführen, sind nicht erforderlich.

Der haubenartige Behälter besitzt einen vom Boden des Gefäßes weg zeigenden Bodenbereich, wobei durch die umgestülpte Anordnung der Boden nach oben zeigt und daher auch als Decke bezeichnet werden könnte. Die Zuleitung ist vorzugsweise durch diesen Bodenbereich von außen in das Innere bzw. dem Innenraum des Behälters geführt. Die Zuleitung mündet dabei weiterhin bevorzugt in demjenigen Abschnitt des Bodenbereiches bzw. ist durch denjenigen Bodenbereich geführt, der vom Boden des Gefäßes am weitesten entfernt ist.

Nach einer weiterhin bevorzugten Ausführungsform besitzt der haubenartige Behälter die Form eines Napfes, einer Glocke oder eines Troges. Im Einbauzustand handelt es sich dann um eine Art umgestülpter Glocke oder Napf bzw. Trog. Wird die Zuleitung nun zentrisch in diese(n) umgestülpte Glocke, umgestülpten Napf oder umgestülpten Trog geführt, dann strömt das Gas zentrisch in diesen Behälter und die Gasblase wächst - wie bereits oben erwähnt - in dem Behälter von innen nach außen. Die Oberfläche dieser Gasblase ist dabei in ständigem Kontakt mit der vorgelegten Flüssigkeit.

Die Gasführungseinrichtung wird vorzugsweise durch die Zuleitung im Inneren des Gefäßes gehaltert, und zwar insbesondere freischwebend. Mit anderen Worten, die Zuleitung dient auch als Halterung für die Gasführungseinrichtung und somit den haubenartigen Behälter. Weitere Halterungen für die Gasführungseinrichtung sind vorzugsweise nicht vorhanden.

Die vom freien Seitenrand des Behälters umgrenzte Fläche bzw. die davon aufgespannte Fläche sollte wesentlich größer sein als die Querschnittsfläche der Zuleitung an ihrem im haubenartigen Behälter mündenden Ende. Das Verhältnis der Querschnittsfläche der Zuleitung an ihrem im haubenartigen Behälter mündenden Ende zu der vom freien Seitenrand des Behälters umgrenzten Fläche bzw. davon aufgespannten Fläche beträgt vorzugsweise 1:20 bis 1:40. Diese Angaben für den Verhältnisbereich umfassen auch bzw. offenbaren auch alle in diesen Bereich fallenden Verhältnisse, beispielsweise 1:25, 1:30 und 1:35.

Die Trennfläche zwischen der im Gefäß vorgelegten Flüssigkeit und der im Behälter gebildeten Gasblase ist somit wesentlich größer als die Querschnittsfläche der Zuleitung. Es bilden sich somit nicht nur wie bei den bekannten, lediglich mit einem Tauchrohr ausgestatteten Vorrichtungen, eine Blase nach der anderen in mehr oder weniger schnellen Folge. Vielmehr verbleibt die innerhalb des Behälters befindlichen Gasblase einen erheblichen Zeitraum mit der vorgelegten Flüssigkeit in Kontakt, sodass eine gute Absorption des zu absorbierenden Gases ermöglicht wird.

Nach einer weiterhin bevorzugten Ausführungsform stellt das Gefäß eine Flasche, insbesondere eine Glasflasche, mit einem Flaschenhals und einen Verschlussdeckel dar. Der Verschlussdeckel ist geeignet, den Flaschenhals gasdicht zu verschließen, jedoch auch wieder entfernt zu werden. Allerdings sind die Zuleitung und die Ableitung durch den Verschlussdeckel hindurchgeführt.

Die erfindungsgemäße Aufgabe wird auch durch ein Verfahren gemäß dem Oberbegriff des Anspruchs 8 gelöst, das dadurch gekennzeichnet ist, dass das zu behandelnde Gas durch eine Zuleitung in einen haubenartigen Behälter geführt wird, dessen Öffnung zum Boden der vorgelegten Absorptionsflüssigkeit zeigt und der unterhalb der Oberfläche der vorgelegten Absorptionsflüssigkeit angeordnet ist und dass die Querschnittsfläche der Zuleitung an ihrem im haubenartigen Behälter mündenden Ende kleiner ist als die vom freien Seitenrand des Behälters umgrenzte Fläche.

Vorzugsweise wird das erfindungsgemäße Verfahren mit Hilfe eines Gefäßes nach einem der Ansprüche 1-7 durchgeführt.

Weiterhin bevorzugt wird die Menge des Gases, das nach dem Durchleiten des zu behandelnden Gasgemisches durch die vorgelegte Absorptionsflüssigkeit erhalten und gesammelt wird, bestimmt.

Bei dem eingesetzten Gasgemisch handelt es sich vorzugsweise um ein solches, das bei der Biogaserzeugung entsteht und Methan enthält.

Das bei der Biogaserzeugung, insbesondere bei der Vergärung von Biosubstrat erhaltene Gasgemisch besteht ca. 60 vol.-% CO₂ und 40 vol.-% Methan. Zudem sind weniger als 1 % andere Gase vorhanden. Um Missverständnisse zu vermeiden wird betont, dass es sich bei diesen Angaben um ungefähre Angaben handelt

Mit Hilfe des erfindungsgemäßen Verfahrens und dem erfindungsgemäßen Gefäß ist es möglich, die erhaltene Menge an Methan und somit den Methanertrag zu bestimmen bzw. zu messen.

Untersucht man die Vergärung von Biosubstrat, dann kann man ermitteln, bei welchen Bedingungen der höchste Methanertrag erhalten wird. Mit anderen Worten, es ist möglich, die optimalen Bedingungen für die Vergärung von Biosubstrat bzw. der Herstellung von Biogas festzustellen.

Die Erfindung wird im Folgenden anhand der nachstehenden Zeichnungen näher erläutert. Dabei zeigen
- Figur 1: eine Vorderansicht des erfindungsgemäßen Gefäßes in Form einer Absorptionsflasche und
- Figur 2: einen Längsschnittansicht der in der Figur 1 gezeigten Absorptionsflasche.

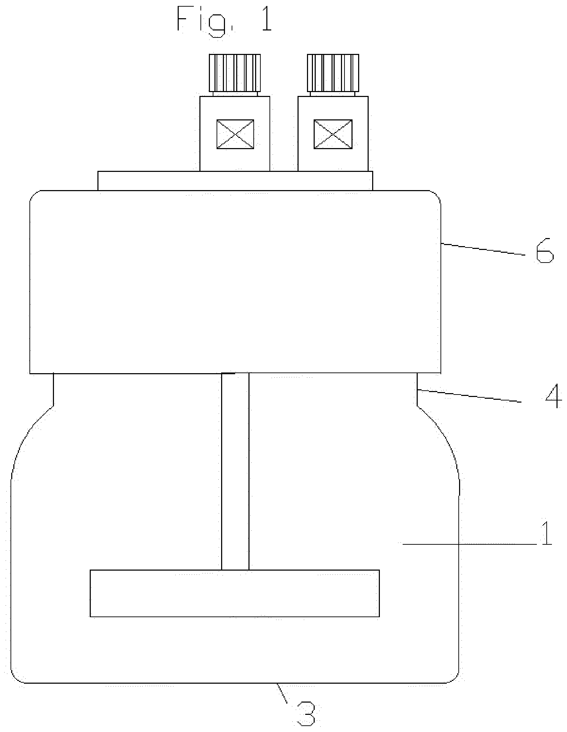

In der Figur 1 ist die Vorderansicht eines erfindungs-gemäßen Gefäßes 1 gezeigt. Es handelt sich dabei um ein flaschenförmiges, zur Längsachse im wesentlichen rotationssymmetrisches Gefäß 1 mit einem Boden 3, einem Hals bzw. hohlzylindrischen Flaschenhals 4 und einem Innenraum 7.

Der Flaschenhals 4 besitzt ein Außengewinde 5, auf das ein Verschlussdeckel 6 mit Hilfe seines Innengewindes 2 aufgeschraubt ist. Der Verschlussdeckel 6 stellt eine Art Kappe dar und dichtet den Innenraum 7 des Gefäßes 1 nach außen hin ab. Der Verschlussdeckel 6 besitzt eine zylinderförmige umlaufende Seitenwand 8, die im oberen Bereich bzw. im Bereich des Deckels einen radial umlaufenden, nach radial innen gerichteten Seitenrand 9 aufweist, der eine kreisförmige zentrale Öffnung 10 einfasst. Das Innengewinde 2 ist an der Innenseite der Seitenwand 8 ausgebildet.

In diese Öffnung 10 ist ein zylindrischer Stopfen 11 eingepasst, der flaschenhalsseitig einen radial umlaufenden, sich nach radial außen erstreckenden Ringflansch 12 besitzt, der die Seitenwand 9 hintergreift, sodass der Stopfen 11 ortsfest platziert ist. Der Ringflansch 12 ist somit zwischen dem Seitenrand 9 und dem oberen freien Rand 13 des Flaschenhalses 4 angeordnet und wird beim Aufschrauben des Verschlussdeckels 6 mit dem oberen Rand 13 verpresst. Dabei ist zwischen dem Stopfen 11 und dem Rand 13 eine Dichtungsscheibe 14 aus einem elastischen Material angeordnet. Der radiale Außenrand der Dichtungsscheibe 14 liegt auf dem Rand 13 auf.

Sowohl der Stopfen 11 als auch die Dichtungsscheibe 14 besitzen jeweils zwei durchgehende Bohrungen 15,16 bzw. 17,18, wobei die Bohrungen 15 und 16 sowie die Bohrungen 17 und 18 miteinander fluchten.

In die zentrisch angeordneten Bohrungen 17,18 ist eine Zuleitung 19 in Form eines Zuleitungsrohres eingesetzt, an dessen zum Boden 3 zeigenden Ende eine Gaszuführungseinrichtung in Form eines haubenartigen Behälters 20 angeordnet ist. Dieser Behälter 20 wird durch das Zuleitungsrohr 19 freischwebend sowie zentrische im Innenraum 7 dem Boden 3 des Gefäßes 1 gegenüberliegend sowie im Abstand davon gehaltert.

Der haubenartige Behälter 20 besitzt in etwa die Form eines zylindrischen Troges, der "umgekehrt" im Innenraum 7 gehaltert ist, wobei der Bodenbereich 21 des Behälters 20 nach oben und somit zum Verschlussdeckel 6 zeigt.

Der Bodenbereich 21 ist radial außen mit einem radial umlaufenden, sich in Richtung des Bodens 3 erstreckenden Randstreifen 22 versehen. Dieser Randstreifen 22 umgrenzt die Öffnung 23 des Behälters bzw. Troges 20. Der Innenraum 24 des Behälters 20 wird somit durch den Bodenbereich 21 und den Randstreifen 22 gebildet. Der freie Seitenrand 25 des Rundstreifens 22 spannt eine kreisscheibenförmige Fläche auf, welche die Öffnung 23 bildet.

Die Zuleitung 19 wird oberhalb des Stopfens 11 durch eine Halteeinrichtung 26 gehaltert, die einen Schraubring 27 besitzt, in den eine nicht gezeigte Zuleitung, beispielsweise ein Glasrohr, eingeführt ist. Mit Hilfe des Schraubringes 27 wird eine Gasabdichtung sichergestellt.

Auf dem Stopfen 11 ist außerhalb des Gefäßes 1 eine weitere, azentrisch angeordnete Halteeinrichtung 28 befestigt, die ebenfalls mit einem Schraubring 29 ausgestattet ist, welcher dem Schraubring 27 entspricht. In diesen Schraubring 29 bzw. in die Halteeinrichtung 28 kann eine Leitung gasdicht eingesetzt werden, durch die im Innenraum 7 des Gefäßes 1 befindliches Gas austreten und zu einer Auffangvorrichtung bzw. einem Gasvolumenzähler geleitet werden kann.

Die Ausgestaltung der Halteeinrichtungen 26 und 28 sowie der Schraubringe 27 und 29 ist üblicher und bekannter Art, sodass eine weitere Erläuterung nicht erforderlich ist.

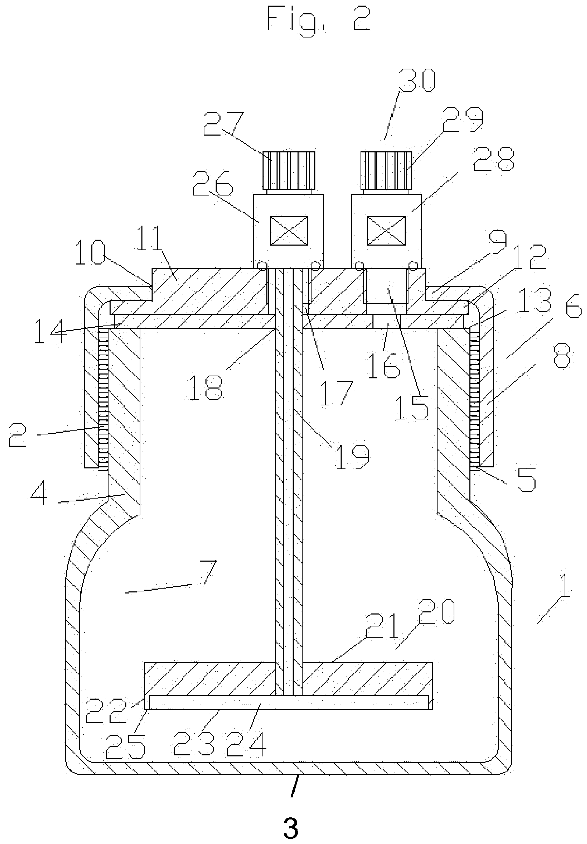

Die in der Figur 2 gezeigte Absorptionsvorrichtung befindet sich im Betriebszustand. Diese Vorrichtung ist somit gasdicht nach außen hin geschlossen. Ein Zugang existiert lediglich über die beiden im Verschlussdeckel 6 angeordnete Zuleitung 19 sowie die Bohrungen 15 bzw. 16. Mit anderen Worten, das mit dem Verschlussdeckel 6 verschlossene Gefäß 1 besitzt eine Zuleitung 19 und eine Ableitung 30, ist ansonsten gasdicht geschlossen. Natürlich kann der Verschlussdeckel 6 abgeschraubt und entfernt werden; dann ist das Gefäß natürlich nicht im Betriebszustand.

Das Gefäß 1 ist aus Glas gefertigt, während der Verschlussdeckel 6 und die Zuleitung 19 aus Kunststoff gefertigt sind, wobei es sich insbesondere um Kunststoffspritzteile handelt. Alle anderen Teile sind spanend gefertigt.

Die Funktionsweise der beschriebenen Vorrichtung wird nachstehend unter Bezug auf ein Gasgemisch, das bei der Biogaserzeugung anfällt näher beschrieben. Dieses Gasgemisch enthält CO₂ und Methan sowie auch noch weitere, jedoch in geringeren Mengen vorhandene Gase.

Das Biogas wird durch die Zuleitung 19 und den Behälter 20 in den Innenraum 7 des Gefäßes 1 über den haubenartigen Behälter 20 eingeführt. Im Innenraum 7 befindet sich eine nicht gezeigte Flüssigkeit in Form einer 3-molaren Natronlauge. Der Behälter 20 ist dabei unterhalb der Flüssigkeitsoberfläche der Natronlauge angeordnet und somit in diese eingetaucht.

Das zugeführte Biogas sammelt sich im Behälter 20 an und verdrängt die im Behälter 20 befindliche vorgelegte Flüssigkeit. Dabei bildet sich eine Gasblase, die im Laufe der Zeit immer größer wird. Wird eine bestimmte Größe dieser Gasblase überschritten, entweicht fast der gesamte Inhalt des Behälters 20 in Form einer großen Blase, die durch die vorgelegte Flüssigkeit aufsteigt und durch die Ableitung 30 nach außen geführt wird. Bei diesem nach außen geführten Gas handelt es sich primär um Methan sowie gegebenenfalls um einige nur in geringem Umfang vorhandene andere Gasbestandteile.

Das Volumen des abgeführten Methans kann auf übliche Weise bestimmt werden. Aus diesen Informationen können Rückschlüsse über die der Biogaserzeugung zugrundeliegenden Phänomene gezogen werden.
- 1: Gefäß
- 2: Innengewinde
- 3: Boden
- 4: Flaschenhals
- 5: Außengewinde
- 6: Verschlussdeckel
- 7: Innenraum
- 8: Seitenwand
- 9: Seitenrand
- 10: Zentrale Öffnung
- 11: Stopfen
- 12: Ringflansch
- 13: Oberer freier Rand
- 14: Dichtungsscheibe
- 15: Bohrung im Stopfen 11
- 16: Bohrung in Dichtungsscheibe 14
- 17: Bohrung im Stopfen 11
- 18: Bohrung in Dichtungsscheibe 14
- 19: Zuleitung/Zuleitungsrohr
- 20: Behälter
- 21: Bodenbereich
- 22: Randstreifen
- 23: Öffnung
- 24: Innenraum
- 25: Freier Seitenrand
- 26: Halteeinrichtung
- 27: Schraubring
- 28: Halteeinrichtung
- 29: Schraubring
- 30: Ableitung

## Patentansprüche

1. Gefäß (1), insbesondere Flasche, zur Absorption eines Gases, insbesondere CO₂, aus einem Gasgemisch, wobei das Gefäß (1) mit einem Boden (3),
mit einer Gaszuführungseinrichtung (20),
mit einer Zuleitung (19), die geeignet ist, ein Gasgemisch in das Gefäß (1) zuzuführen, und
mit einer Ableitung (30), die geeignet ist, ein im Gefäß (1) vorhandenes Gasgemisch aus dem Gefäß (1) abzuführen und oberhalb der Gaszuführungseinrichtung (20) in dem Gefäß (1) mündet, ausgestattet ist und
im Betriebszustand bis auf die Zuleitung (19) und Ableitung (30) gasdicht geschlossenen ist,
**dadurch gekennzeichnet, dass**
die Gaszuführungseinrichtung (20) einen haubenartigen Behälter (20) darstellt, die Öffnung (23) des haubenartigen Behälters (20) zum Boden des Gefäßes (1) zeigt,
die Zuleitung (19) in dem vom Bodenbereich (21) sowie von der Seitenwand (22) des Behälters (20) umgrenzten Innnenraum (24) mündet und
die Querschnittsfläche der Zuleitung (19) an ihrem im haubenartigen Behälter (30) mündenden Ende kleiner ist als die vom freien Seitenrand (25) der Seitenwand (22) des Behälters (20) umgrenzte Fläche.

2. Gefäß nach Anspruch 1,
**dadurch gekennzeichnet,**
**dass** die Zuleitung (19) durch den Bodenbereich (21) des Behälters (20) geführt ist.

3. Gefäß nach Anspruch 1 oder 2,
**dadurch gekennzeichnet,**
**dass** die Zuleitung (19) die Gasführungseinrichtung (20) im Inneren des Gefäßes (1) haltert, insbesondere frei schwebend.

4. Gefäß nach einem der vorhergehenden Ansprüche,
**dadurch gekennzeichnet,**
**dass** die Zuleitung (19) in demjenigen Abschnitt des Bodenbereiches (21) des haubenartigen Behälters (30) durch diesen Bodenbereich (21) geführt ist, der vom Boden (3) des Gefäßes (1) am weitest entfernt ist.

5. Gefäß nach einem der vorhergehenden Ansprüche,
**dadurch gekennzeichnet,**
**dass** der haubenartige Behälter (3) die Form eines Napfes, einer Glocke oder eines Troges besitzt.

6. Gefäß nach einem der vorhergehenden Ansprüche,
**dadurch gekennzeichnet,**
**dass** das Verhältnis der Querschnittfläche der Zuleitung (19) an ihrem im haubenartigen Behälter (20) mündenden Ende zu der vom freien Seitenrand (25) des Behälters (20) umgrenzten Fläche 1 : 20 bis 1 : 40 beträgt.

7. Gefäß nach einem der vorhergehenden Ansprüche,
**dadurch gekennzeichnet,**
**dass** das Gefäß (1) eine Flasche, insbesondere eine Glasflasche, mit einem Flaschenhals (4) und einen Verschlussdeckel (6) umfasst, der geeignet ist, den Flaschenhals (4) zu verschließen, jedoch auch wieder entfernt werden kann, und
die Zuleitung (19) und die Ableitung (30) durch den Verschlussdeckel (6) hindurchgeführt sind.

8. Verfahren zur Absorption eines Gases, insbesondere CO₂, aus einem Gasgemisch, bei dem das zu behandelnde Gas durch eine vorgelegte Absorptionsflüssigkeit hindurchgeleitet wird und nach Austritt aus der Absorptionsflüssigkeit gesammelt wird,
**dadurch gekennzeichnet,**
**dass** das zu behandelnde Gas durch eine Zuleitung (19) in einen haubenartigen Behälter (20) geführt wird, dessen Öffnung (23) zum Boden der vorgelegten Absorptionsflüssigkeit zeigt und der unterhalb der Oberfläche der vorgelegten Absorptionsflüssigkeit angeordnet ist und die Querschnittfläche der Zuleitung (19) an ihrem im haubenartigen Behälter (20) mündenden Ende kleiner ist als die vom freien Seitenrand (9) des Behälters (20) umgrenzte Fläche (23).

9. Verfahren nach Anspruch 8 ,
**dadurch gekennzeichnet,**
**dass** es mit Hilfe eines Gefäßes (1) nach einem der Ansprüche 1 bis 7 durchgeführt wird.

10. Verfahren nach Anspruch 8 oder 9,
**dadurch gekennzeichnet**,
die Menge des Gases, das nach dem Durchleiten des zu behandelnden Gasgemisches durch die vorgelegte Absorptionsflüssigkeit erhalten und gesammelt wird, bestimmt wird.

11. Verfahren nach einem der Ansprüche 8 bis 10,
**dadurch gekennzeichnet,**
**dass** ein Gasgemisch eingesetzt wird, welches bei der Biogaserzeugung entsteht und Methan enthält.
